## Europäisches Patentamt

## European Patent Office

## Office européen des brevets

(19)

(11) Veröffentlichungsnummer: **0 200 150**
**B1**

(12) # EUROPÄISCHE PATENTSCHRIFT

(45) Veröffentlichungstag der Patentschrift:
**03.01.90**

(21) Anmeldenummer: **86105612.5**

(22) Anmeldetag: **23.04.86**

(51) Int. Cl.⁴: **A23F 3/36**

(54) Verfahren zur Entcoffeinierung von Tee.

(30) Priorität: **02.05.85 DE 3515740**

(43) Veröffentlichungstag der Anmeldung:
**10.12.86 Patentblatt 86/45**

(45) Bekanntmachung des Hinweises auf die Patenterteilung:
**03.01.90 Patentblatt 90/1**

(84) Benannte Vertragsstaaten:
**AT BE CH DE FR GB IT LI LU NL SE**

(56) Entgegenhaltungen:
**EP-A- 0 140 061**
**EP-A- 0 159 724**
**DE-A- 3 413 869**
**FR-A- 2 360 260**
**FR-A- 2 408 607**
**US-A- 2 198 859**

(73) Patentinhaber: **SKW Trostberg Aktiengesellschaft,
Dr.-Albert-Frank-Strasse 32 Postfach 1150/1160,
D-8223 Trostberg(DE)**

(72) Erfinder: **Klima, Hubertus, Fiedlerstrasse 3,
D-8221 Tacherting(DE)**
Erfinder: **Schütz, Erwin, Dr., Steiner Strasse 22,
D-8221 Palling(DE)**
Erfinder: **Vollbrecht, Heinz-Rüdiger, Dr.,
Herzog-Nikolas-Strasse 15, D-8221 Stein/Traun(DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86(DE)**

**Beschreibung**

Die vorliegende Erfindung betrifft ein Verfahren zur Entcoffeinierung von Tee mit Hilfe von überkritischen Gasen, insbesondere $CO_2$.

Es sind bereits verschiedene Verfahren zur Entfernung von Coffein aus Tee beschrieben worden. So ist es bspw. bekannt, das Coffein mit organischen Lösungsmitteln aus dem Tee zu extrahieren. Nachteilig bei dieser Methode ist die geringe Selektivität, d. h. es werden außer Coffein noch wichtige Geschmacksstoffe mitentfernt. Darüber hinaus ist die rückstandslose Entfernung der Lösemittel schwierig und technisch kaum realisierbar.

Es ist deshalb versucht worden, anstelle von organischen Lösemitteln überkritische Gase als Extraktionsmittel einzusetzen. So wird bspw. in der DE-AS 21 27 642 ein zweistufiges Verfahren zur Entcoffeinierung von Tee beschrieben, bei welchem zunächst mit trockenem überkritischen $CO_2$ die Aromastoffe entfernt werden, anschließend mit feuchtem überkritischem $CO_2$ das Coffein extrahiert und nach Rücktrocknung des Tees das im ersten Extraktionsschritt abgetrennte Aroma dem Tee wieder aufimprägniert wird.

Ein wesentlicher Nachteil dieses Verfahrens ist die zweistufige Verfahrensweise, die technisch sehr aufwendig ist und hohe Investitions- und Betriebskosten erfordert. Außerdem ist die Abscheidung des Coffeins durch Druckentspannung und Temperatursenkung in wirtschaftlicher Hinsicht problematisch, da man anschliessend erhebliche Energie aufwenden muß, um das $CO_2$ wieder auf den überkritischen Bereich zu bringen.

Zur Umgehung dieses Problems hat deshalb gemäß der DE-PS 26 37 197 versucht, dem $CO_2$ das Coffein mit Ionenaustauschern im überkritischen Druckbereich zu entziehen. Damit konnte auf die zweistufige Extraktion jedoch nicht verzichtet werden.

Erst mit Hilfe des Vefahrens gemäß der deutschen Patentanmeldung P 34 15 844.8 wurde es möglich, die Entcoffeinierung des Tees in einer Stufe zu vollziehen. Dies wird dadurch erreicht, daß man den Tee mit einem Feuchtigkeitsgehalt von 15 bis 50 Gew.-% mit feuchtem $CO_2$ bei 260 bis 350 bar bis 70°C extrahiert, dann dem coffeinhaltigen $CO_2$ im gleichen Druckbereich mit Aktivkohle das Coffein wieder entzieht und danach das coffeinfreie $CO_2$ über den bereits extrahierten Tee recyclisiert, den Tee vom $CO_2$ abtrennt und trocknet.

Der einzige Nachteil dieses Verfahrens besteht darin, daß die Extraktionszeiten relativ lang und die einzusetzenden $CO_2$-Mengen relativ groß sind.

Der vorliegenden Erfindung lag daher die Aufgabe zugrunde, das Verfahren zur Entcoffeinierung von Tee gemäß P 34 15 844,8 zu verbessern und ein Verfahren zu entwickeln, das dessen Nachteile nicht aufweist.

Diese Aufgabe wurde erfindungsgemäß dadurch gelöst, daß man das Adsorbens, insbesondere Aktivkohle in einer Menge von 5 bis 40 Gew.-%, bezogen auf das Tockengewicht des Tees, im Extraktionsgut verteilt.

In der EP-A 140 061 wird ein Verfahren zur Entkoffeinierung von Teeblättern mittels $CO_2$ beschrieben, bei dem man die Schichtdicke der Teeblätter klein im Verhältnis zur Schichtabmessung quer zur Strömungsrichtung wählt und das $CO_2$ durch die Teeblätterschicht mit sich in Strömungsrichtung ändernder, inbesondere steigender Geschwindigkeit führt.

Bezüglich der zur Durchführung dieses Verfahrens erforderlichen Parameter sind in dieser Druckschrift jedoch keinerlei Hinweise zu finden.

Aus der DE-OS 3 413 869 ist ein Verfahren zur Entkoffeinierung von schwarzem Tee mit flüssigem $CO_2$ bekannt. Hauptnachteil dieses Verfahrens sind die relativ langen benötigten Entkoffeinierungszeiten.

Die FR-A 2 408 607 offenbart ein Verfahren zur Entkoffeinierung von grünen Kaffeebohnen, wobei man das Koffein mit Hilfe von überkritischem $CO_2$ entzieht und daraus das Koffein mit Hilfe von speziellen synthetischen Polymerharzen adsorbiert. Abgesehen davon, daß eine Übertragung des Verfahrens auf Tee nicht ohne weiteres möglich ist, benötigt man bei diesem Verfahren vergleichsweise große Mengen an Adsorptionsmittel.

Es hat sich überraschenderweise gezeigt, daß mit Hilfe des erfindungsgenäßen Verfahrens die Extraktionszeiten für einen bestimmten Entcoffeinierungsgrad drastisch gekürzt bzw. die anzuwende de $CO_2$-Menge erheblich gesenkt werden können. Darüber hinaus unterscheidet sich der auf diese Weise hergestellte Tee bezüglich seines Geschmackes und Aromas praktisch kaum von solchem Tee, bei dem die Extraktion des Coffeins und die Abscheidung des Coffeins mittels Adsorbens räumlich getrennt vorgenommen wurde.

Entsprechend der vorliegenden Erfindung wird das Adsorbens in einer Menge von 5 bis 40 Gew.-%, bezogen auf das Trockengewicht des Tees, im Extraktionsgut verteilt. Bei der Verwendung von weniger als 5 Gew.-% Adsorbens ist die Adsorption des Coffeins im Adsorbens unzureichend und der extrahierte Tee weist folglich einen unerwünscht hohen Coffeinendgehalt auf. Die Verwendung von mehr als 40 Gew.-% ist unwirtschaftlich, da mit mehr als 40 Gew.-% Adsorbens kein wesentlich größerer Adsorptionsgrad erreicht wird. Andererseits stellt das überschüssige Adsorbens nur Ballastmaterial dar, welches dann unnötigerweise Platz im Extraktivautoklaven wegnimmt.

Als Adsorbens wird bevorzugt Aktivkohle eingesetzt, doch können auch andere Adsorptionsmittel wie z. B. Ionenaustauscher, Kieselgur, Zeolithe oder Aktivtonerden eingesetzt werden.

Die gleichmäßige Verteilung des Adsorbens im Extraktionsgut kann in mehreren technischen Ausführungen erfolgen.

Die einfachste Möglichkeit besteht darin, den Tee vor der Beschickung des Autoklaven mit dem Adsorbens homogen zu vermischen, wofür die üblichen technischen Vorrichtungen eingesetzt werden können.

Weiterhin ist es möglich, den Autoklaven schichtweise zu befüllen, wobei der Autoklav abwechselnd mit Tee und Adsorbens beschickt wird. Bei beiden Ausführungsformen hat es sich als vorteilhaft erwiesen, den $CO_2$-Strom vor Verlassen des Autoklaven noch einmal durch eine reine Adsorbens-Schüttung hindurchzuleiten, damit noch eventuell vorhandenes Coffein aus dem Gasstrom entfernt wird.

Es ist selbstverständlich, daß bei diesen Verfahrensvarianten nach der Extraktion das Adsorbens vom entcoffeinierten Tee wieder abgetrennt werden muß. Dies kann mit den üblichen Trennmethoden wie Zyklonabscheidung, Windsichten, Siebklassieren oder Elektrofiltration erfolgen. Um hierbei eine optimale Trennung zu erreichen, ist es bevorzugt, daß sich die Korngröße des Adsorbens deutlich von der Partikelgröße des eingesetzten Tees unterscheidet. Die ist normalerweise dann der Fall, wenn das Adsorbens einen relativ großen Korndurchmesser aufweist. Andererseits nimmt mit zunehmender Korngröße die spezifische Oberfläche ab, was sich auf die Adsorptionswirkung negativ auswirkt. Der bevorzugte mittlere Korngrößenbereich ist deshalb von 0,1 bis 10 mm zu wählen.

Um die nachfolgende Trennung des Tees vom Adsorbens zu erleichtern, ist es im Rahmen der vorliegenden Erfindung auch möglich, das Adsorbens mit solchen Materialien zu umhüllen, die vom $CO_2$-Strom ungehindert durchströmt werden können, andererseits aber ein Austreten des Adsorbens in den Extraktionsraum verhindern.

Das Adsorbens kann bspw. in Behälter eingefüllt werden, die durch entsprechende Siebe oder Öffnungen ein Durchströmen mit dem $CO_2$-Strom ermöglichen. Diese Behälter können entweder fest in den Autoklaven eingebaut werden und durch entsprechende Vorrichtungen vor und nach der Extraktion befüllt bzw. entleert werden oder beim Befüllen des Autoklaven mit Tee in der Schüttung gleichmäßig verteilt werden.

Gemäß einer weiteren Ausführungsform wird das Adsorbens mit Textilmaterial umhüllt. Es kann in Beutel, Säcke oder Schläuche gefüllt werden und gleichmäßig innerhalb des Extraktionsgutes verteilt oder schichtweise in dieses eingebracht werden. Wichtig ist nur, daß die Maschenweite des Gewebes groß genug ist, damit das $CO_2$-Gas ungehindert ein- und dadurchustreten kann, aber kleiner ist als die Teilchendurchmesser des Adsorbens, um ein Austreten desselben zu verhindern.

Eine weitere Ausführungsform besteht darin, das Adsorbens mit einem porösen anorganischen Trägermaterial zu umgeben, wie z. B. porösem Ton oder porösem Graphit, welches zwar den Kontakt des Gases mit der Aktivkohle, jedoch nicht den Kontakt des Tees mit der Aktivkohle ermöglicht.

Das erfindungsgemäße Verfahren ist sowohl bei axialer als auch bei radialer Durchströmung des Autoklaven mit überkritischen Gasen anwendbar. Es muß dabei nur berücksichtigt werden, daß ggf. die mit Adsorbens gefüllten Behälter optimal im Schüttgut angeordnet sind.

Für eine Entcoffeinierung des Tees ist es ausreichend, mit dem erfindungsgemäßen Verfahren 1 - 4 Stunden zu extrahieren.

Bei Anwendung des erfindungsgemäßen Verfahrens kann die Menge an $CO_2$ bedeutend vermindert werden. Bevorzugt werden zur Extraktion 0,1 bis 3 kg $CO_2$ pro g zu entfernendem Coffein im Tee eingesetzt.

Mit Hilfe des Extraktionsverfahrens entsprechend der vorliegenden Erfindung ist es möglich, den Entcoffeinierungsprozeß wesentlich ökonomischer zu gestalten. Durch die kürzeren Extraktionszeiten von 1 bis 4 Stunden und die Anwendung relativ geringer Mengen an $CO_2$ sind wesentlich höhere Durchsätze erzielbar. Darüber hinaus ist der apparative Aufwand sehr gering, da die Extraktion und die Adsorption des Coffeins in einer Apparatur durchgeführt werden können, weshalb sich dieses Verfahren besonders gut für den großtechnischen Maßstab eignet.

Die nachfolgenden Beispiele sollen die Erfindung näher erläutern:

Beispiel 1 :

4 kg einer handelsüblichen Schwarzteemischung mit einem Coffeingehalt von 2,9 % werden mit 10 Gew.-% Aktivkohle (Korndurchmessr 1 - 3 mm) gemischt und mit 40 Gew.-% Wasser befeuchtet. Das Gemisch wird in einen zylindrischen Extraktionsautoklaven eingefüllt und anschließend mit feuchtem überkritischen $CO_2$ bei 260 bar und 63°C 2 Stunden lang extrahiert (Durchsatz des $CO_2$-Gases: 200 kg/h). Nach der Trennung des Tees von der Aktivkohle durch Windsichten wird der Tee getrocknet. Der Coffeingehalt des Tees beträgt 0,48 %, was einem Extraktionsgrad von 83,,5 % entspricht.

Beispiel 2 :

8 kg derselben Teemischung werden mit 25 Gew.-% Aktivkohle derselben Körnung gemischt und mit 40 Gew.-% Wasser befeuchtet. Die Extraktion wird analog Beispiel 1 durchgeführt, jedoch mit halbiertem $CO_2$-Durchsatz und einer Extraktionszeit von 1 Std. Nach Trennung des Gemisches und Trocknung des Tees wird ein Coffeingehalt von 0,21 % im Tee ermittelt (Extraktionsgrad 92,8 %). Durch die Erhöhung des Aktivkohleanteils wurde die Entcoffeinierungszeit bei besserem Ergebnis halbiert und der spezifische $CO_2$-Verbrauch (bezogen auf die Tee-Einwaage) gleichzeitig auf 1/8 reduziert.

**Patentansprüche**

1. Verfahren zur Entcoffeinierung von Tee durch Extraktion von 15 bis 50 Gew.-% Wasser enthaltendem Tee mit feuchtem $CO_2$ bei 255 bis 350 bar und 50 bis 80°C, anschließender Abtrennung des Coffeins vom $CO_2$ mit Hilfe eines Adsorbens und Recyclisierung des coffeinfreien $CO_2$ über den bereits extrahierten Tee, wobei man das Adsorbens, insbesondere Aktivkohle, in einer Menge von 5 bis 40 Gew.-%, bezogen auf das Trockengewicht des Tees, im Extraktionsgut verteilt.

2. Verfahren nach Anspruch 1, **dadurch gekennzeichnet**, daß man das Adsorbens mit dem Tee vor der Beschickung des Autoklaven homogen vermischt.

3. Verfahren nach den Ansprüchen 1 und 2, **dadurch gekennzeichnet**, daß man den Autoklaven schichtweise abwechselnd mit Tee und Adsorbens befüllt.

4. Verfahren nach den Ansprüchen 1 bis 3, **dadurch gekennzeichnet**, daß man den $CO_2$-Strom vor Verlassen des Autoklaven durch reine Adsorbens-Schüttung hindurchleitet.

5. Verfahren nach den Ansprüchen 1 bis 4, **dadurch gekennzeichnet**, daß man ein Adsorbens mit einer Korngröße von 0,1 bis 10 mm verwendet.

6. Verfahren nach den Ansprüchen 1 bis 5, **dadurch gekennzeichnet**, daß man das Absorbens nach der Extraktion durch Zyklonabscheidung, Windsichten, Siebklassierung oder Elektrofiltration vom Tee abtrennt.

7. Verfahren nach den Ansprüchen 1 bis 6, **dadurch gekennzeichnet**, daß man das Adsorbens mit gasdurchlässigen Materialien umhüllt.

8. Verfahren nach Anspruch 7, **dadurch gekennzeichnet**, daß das Adsorbens in Beutel, Säcke oder Schläuche aus Textilmaterial gefüllt, eingesetzt wird.

9. Verfahren nach Anspruch 7, **dadurch gekennzeichnet**, daß man das Adsorbens mit porösem Ton oder porösem Graphit umhüllt.

10. Verfahren nach den Ansprüchen 1 bis 9, **dadurch gekennzeichnet**, daß das überkritische Gas den Autoklaven in axialer oder radialer Richtung durchströmt.

11. Verfahren nach den Ansprüchen 1 bis 10, **dadurch gekennzeichnet**, daß man 1 bis 4 Stunden extrahiert.

12. Verfahren nach den Ansprüchen 1 bis 11, **dadurch gekennzeichnet**, daß man 0,1 - 3 kg $CO_2$ pro g zu entfernendes Coffein im Tee verwendet.

## Claims

1. Process for the decaffeination of tea by extracting tea containing 15 to 50 wt.% of water with moist $CO_2$ at 255 to 350 bar and 50 to 80°C., subsequent separation of the caffeine from the $CO_2$ with the help of an adsorbent and recycling the caffeine-free $CO_2$ over the already extracted tea, wherein one distributes the adsorbent, especially activated carbon, in the material to be extracted in an amount of 5 to 40 wt.%, referred to the dry weight of the tea.

2. Process according to claim 1, characterised in that one mixes the adsorbent homogeneously with the tea before filling the autoclave.

3. Process according to claims 1 and 2, characterised in that one fills the autoclave with alternating layers of tea and adsorbent.

4. Process according to claims 1 to 3, characterised in that one passes the $CO_2$ stream through pure adsorbent packing before leaving the autoclave.

5. Process according to claims 1 to 4, characterised in that one uses an adsorbent with a grain size of 0.1 to 10 mm.

6. Process according to claims 1 to 5, characterised in that one separates the adsorbent from the tea after the extraction by means of cyclone separation, air sifting, sieve classification or electrofiltration.

7. Process according to claims 1 to 6, characterised in that one envelops the adsorbent with gas-permeable materials.

8. Process according to claim 7, characterised in that the adsorbent is used filled into bags, sacks or tubes of textile material.

9. Process according to claim 7, characterised in that one envelops the adsorbent in porous clay or porous graphite.

10. Process according to claims 1 to 9, characterised in that the supercritical gas flows through the autoclave in the axial or radial direction.

11. Process according to claims 1 to 10, characterised in that one extracts for 1 to 4 hours.

12. Process according to claims 1 to 11, characterised in that one uses 0.1–3 kg. of $CO_2$ per g. of caffeine to be removed from the tea.

## Revendications

1. Procédé pour la décaféination du thé par extraction de 15 à 50% en poids de thé contenant de l'eau par du $CO_2$ humide sous 255 à 350 bars et entre 50 et 80°C, par séparation subséquente de la caféine du $CO_2$ à l'aide d'un adsorbant et recyclage du $CO_2$ exempt de caféine au-dessus du thé déjà extrait, moyennant quoi on répartit l'adsorbant, en particulier du charbon actif dans le produit d'extraction en une quantité de 5 à 40% en poids par rapport au poids sec du thé.

2. Procédé selon la revendication 1, caractérisé en ce qu'on réalise un mélange homogène de l'adsorbant avec le thé avant le chargement de l'autoclave.

3. Procédé selon les revendications 1 et 2, caractérisé en ce qu'on remplit l'autoclave de couches alternées de thé et d'adsorbant.

4. Procédé selon les revendications 1 à 3, caractérisé en ce que l'on fait passer le courant de $CO_2$, avant la sortie de l'autoclave, à travers l'adsorbant en vrac pur.

5. Procédé selon les revendications 1 à 4, caractérisé en ce qu'on emploie un adsorbant d'une granulométrie de 0,1 à 10 mm.

6. Procédé selon les revendications 1 à 5, caractérisé en ce qu'on sépare l'adsorbant du thé après l'extraction par séparation au moyen de cyclones, par séparation pneumatique, par tamisage ou par électrofiltration.

7. Procédé selon les revendications 1 à 6, caractérisé en ce qu'on entoure l'adsorbant de matières perméables aux gaz

8. Procédé selon la revendication 7, caractérisé en ce que l'adsorbant est mis en œuvre, chargé dans des poches, des sacs ou des boyaux en matière textile.

9. Procédé selon la revendication 7, caractérisé en ce qu'on entoure l'adsorbant d'argile poreuse ou de graphite poreux.

10. Procédé selon les revendications 1 à 9, caractérisé en ce que le gaz surcritique traverse l'autoclave dans le sens axial ou radial.

11. Procédé selon les revendications 1 à 10, caractérisé en ce qu'on extrait pendant 1 à 4 heures.

12. Procédé selon les revendications 1 à 11, caractérisé en ce qu'on emploie 0,1 à 3 kg de $CO_2$ par g de caféine à éliminer du thé.